# EUROPEAN PATENT SPECIFICATION

(11) **EP 0 780 329 B1**
(45) Date of publication and mention of the grant of the patent: **01.12.1999**
(21) Application number: 96203623.2
(22) Date of filing: 19.12.1996
(51) Int. Cl.: B65G 47/68, B65G 47/32, B65G 47/84

(54) **Apparatus for transporting articles**
Fördervorrichtung für Gegenstände
Dispositif de transport d'articles

(30) Priority: 21.12.1995 JP 33329095
(43) Date of publication of application: 25.06.1997
(73) Proprietor: Shikoku Kakoki Co., Ltd., Itano-gun Tokushima (JP)
(72) Inventor: Matsuda, Hiroyuki, c/o Shikoku Kakoki Co., Ltd., Kitajima-cho, Itano-gun, Tokushima (JP); Yoshida, Kiyomi, c/o Shikoku Kakoki Co., Ltd., Kitajima-cho, Itano-gun, Tokushima (JP); Iwano, Fumiyuki, c/o Shikoku Kakoki Co., Ltd., Kitajima-cho, Itano-gun, Tokushima (JP); Ueda, Michio, c/o Shikoku Kakoki Co., Ltd., Kitajima-cho, Itano-gun, Tokushima (JP)
(74) Representative: Vollebregt, Cornelis Jacobus, Ir.

(56) References cited:
- GB-A- 356 648
- GB-A- 2 005 211

## Description

### BACKGROUND OF THE INVENTION

The present invention relates to apparatus for transporting articles, for example, paper packs filled with contents.

Such apparatus already known include those comprising a first conveyor having one or a plurality of transport paths extending forward, a delivery device for forwardly discharging articles from the front end of each transport path of the first conveyor, and a second conveyor having a continuously drivable endless belt so disposed as to receive the articles discharged by the delivery device and extending in a direction orthogonal to the transport path or paths of the first conveyor.

In said known apparatus the article discharged by the delivery device tends to tumble when the belt receives the article. If the second conveyor is slowed down to avoid this, the article to be currently discharged will interfere with the article discharged in the preceding cycle, hence a limitation to the reduction in the operating speed of the second conveyor.

### SUMMARY OF THE INVENTION

An object of the present invention is to provide an article transport apparatus of the type described wherein articles can be transferred from the first conveyor to the second conveyor with good stability without tumbling the article

The present invention provides an article transport apparatus as defined in claim 1.

With the article transport apparatus of the present invention, the article sent forward by the first conveyor is discharged from the first conveyor by the delivery device and then received by the fixed slide plate of the second conveyor. The received article is pushed forward on the slide plate by the pusher member.

Accordingly, the article can be transferred from the first conveyor to the second conveyor with good stability without tumbling.

Preferably the article transport apparatus further comprises a third conveyor continuously drivable in the same direction as the direction of movement of the pusher member and having a transport path connected to the slide plate in parallel thereto and a guide rail extending obliquely across the slide plate thereabove so as to be positioned downstream with respect to the direction of movement of the pusher member. The article pushed forward on the slide plate is then guided from the glide plate onto the third conveyor by the guide rail.

Articles can therefore be transported from the first conveyor to the third conveyor without tumbling.

Alternatively, the third conveyor may be connected in series with the second conveyor.

When the speed of movement of the pusher member is the same as the speed at which the third conveyor is driven, the article is guided from the slide plate onto the third conveyor without a speed variation. This assures smooth transfer of the article from the slide plate onto the third conveyor.

The two transport paths of the first conveyor deliver articles respectively to an upstream receiving position and a downstream receiving position on the slide plate. Preferably, the apparatus is so adapted that when an article is delivered to the downstream receiving position, another article delivered to the upstream receiving position and being pushed by one of the pusher members is positioned between the two receiving positions. The article delivered to the downstream receiving position is then pushed forward by the article delivered to the upstream receiving position and pushed by one of the pusher members.

Consequently, the two articles delivered to the two receiving position at a time interval can be pushed forward by one pusher member, hence an improved efficiency.

It is noted that GB-A-356 648 discloses a transport apparatus for coils or bundles of wire wherein by means of a chain with dogs the coils or bundles are shifted on a platform provided with a longitudinal groove accommodating hooks for picking up the coils or bundles.

GB-2 005 211 discloses a device for transferring and combining cigarette packs comprising two parallel endless conveying belts. From said conveying belts the packs are displaced by means of rotating wheels towards a further endless belt.

### BRIEF DESCRIPTION OF THE DRAWINGS

FIG. 1 is a perspective view showing an apparatus of the invention for transporting articles as arranged in a row;
FIG. 2 is a plan view of the apparatus;

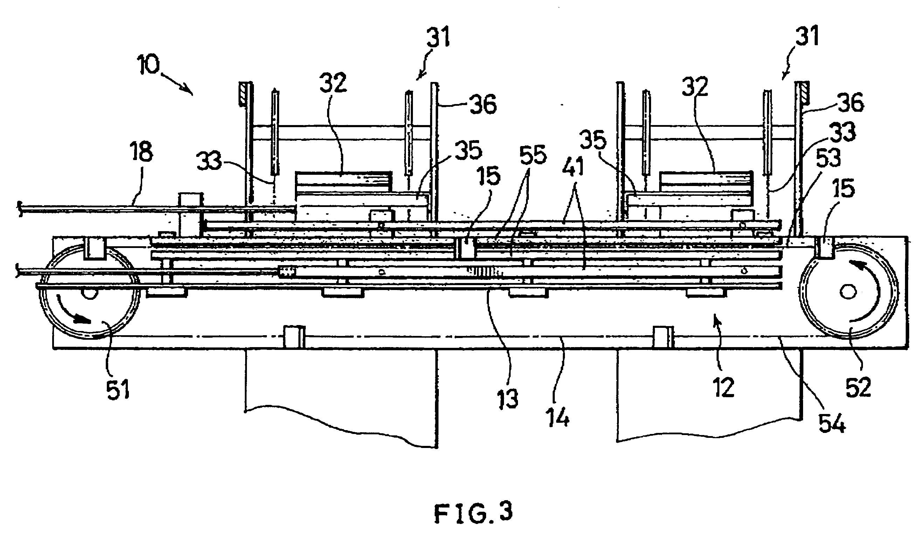

FIG. 3 is a front view of the apparatus;
FIG. 4 is a view in vertical section of the apparatus;
FIG. 5 is a diagram for illustrating the transporting operation of the apparatus;
FIG. 6 is a schematic perspective view corresponding to FIG. 1 and showing a modification of the apparatus; and
FIG. 7 is a schematic perspective view corresponding to FIG. 1 and showing another modification of the apparatus.

### DESCRIPTION OF THE PREFERRED EMBODIMENTS

Embodiments of the invention will be described below with reference to the drawings.

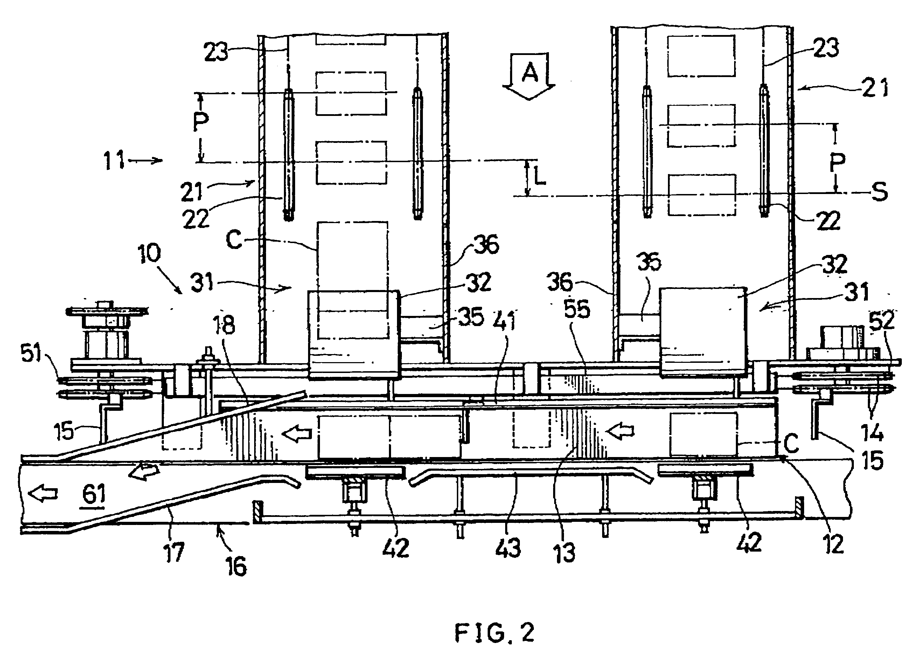

In the following description, the term "front" refers to the side toward which containers advance as transported by a first conveyor 11 (the arrow A in FIG. 2), the term "rear" to the opposite side, and the terms "right" and "left," respectively, to the right and left sides of the illustrated apparatus as it is seen from the front (the right-hand side and left-hand side of FIG. 2).

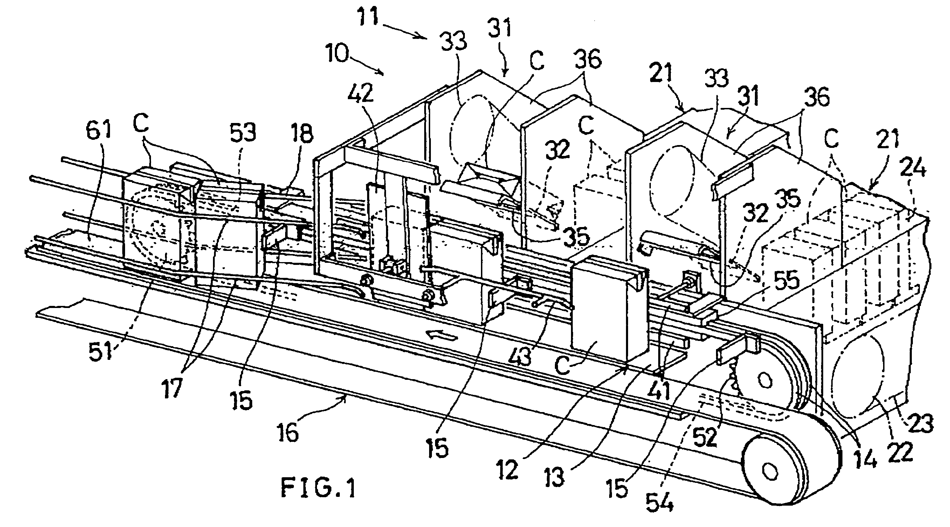

FIG. 1 shows the front end portion of the first conveyor 11 and the portion of the apparatus to the front thereof.

The apparatus is so adapted that containers C each in a flat rectangular parallelepipedal form and sent forward as turned upside down in two rows are further transported as arranged in a row. The transport apparatus comprises the first conveyor 11, a delivery device 10 for forwardly discharging the containers C from the front end of the first conveyor 11, a second conveyor 12 having a transport path extending transversely of the first conveyor 11 and so disposed as to receive the containers C discharged by the delivery device 10, a third conveyor 16 having a transport path extending along the front side of the transport path of the second conveyor 12 in parallel thereto, and two pairs, i.e., upper and lower pairs, of front and rear guide, rails 17, 18 so arranged as to guide the containers C from the second conveyor 12 to above the third conveyor 16.

The first conveyor 11 comprises a pair of right and left conveyor units 2i each having a forwardly extending path of transport. The transport path has a rear end connected to a container forming apparatus although not shown. While this apparatus successively produces containers as arranged in a row, these containers are dividedly supplied to the pair of conveyor units 21 so that the containers can be worked on efficiently during transport on the first conveyor 11 and also to avoid increasing the length of transport path of the first conveyor 11.

Each of the conveyor units 21 comprises a pair of right and left sprockets 22, a pair of endless chains 23 reeved around the respective sprockets 22 and a multiplicity of holders 24 attached to the chains 23 so as to extend therebetween.

As shown in FIG. 2, the two conveyor units 21 of the first conveyor 11 are intermittently driven one pitch P at a time with a phase displacement of 1/2 of 360 deg as one cycle, i.e., of 180 deg. In other words, when a container C on the right conveyor unit 21 is halted at a discharge station S, a container transported on the left conveyor 21 and corresponding to the container C is at a position Upstream from the discharge station 5 by a distance L corresponding to 1/2 cycle.

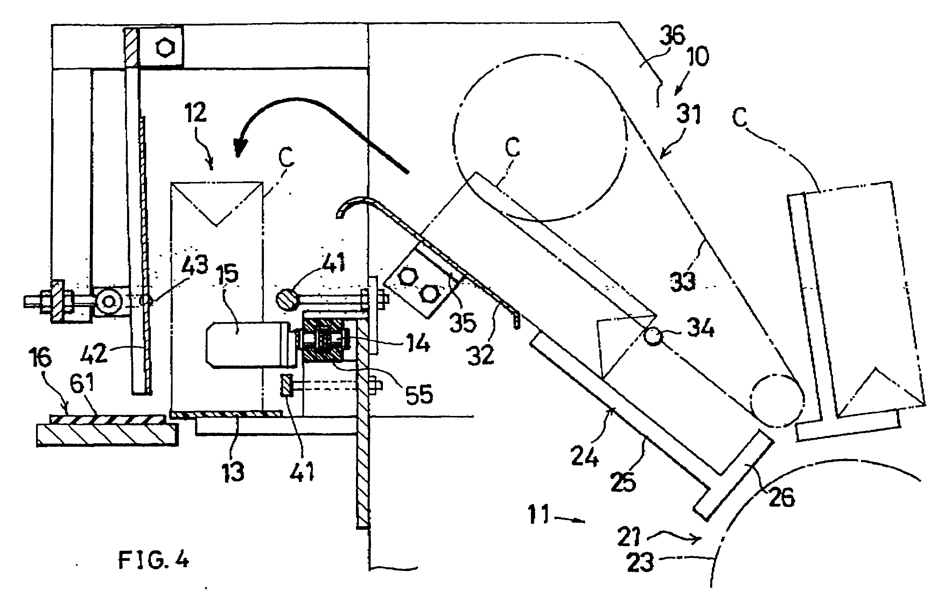

With reference to FIG. 4, the holder 24 is a T-shaped member comprising a side plate 25 and a bottom plate 26. When the holders 24 move along the upper path of movement of the chains, each two front and rear adjacent holders 24 have their side plates 26 positioned in parallel, with their bottom plates 26 joined in alignment, and the'container C is held, in the direction of its thickness, between the holder side plates 25, supported by the holder bottom plates 26 and thereby retained by the holders 24. FIG. 4 shows a holder 24 as halted at the discharge station S while it is being turned around the sprockets 22. At this time, the side plates 25 of the holder 24 and the adjacent holder 24 in the rear thereof are inclined at different angles, with their outer ends opened by being moved away from each other, rendering the container C easy to remove from between the holders 24.

The delivery device 10 comprises a pair of right and left discharge units 31 arranged at the respective terminals of the two conveyor units 21.

Each of the discharge units 31 comprises a guide plate 32 disposed on a phantom outward extension line of the side plate 25 of the holder 24 which is the downstream, with respect to the direction of transport by the conveyor, of the two adjacent holders 24 halted at the discharge station S, a continuously drivable endless chain 33 having a straight path of movement positioned at one side of and extending along the side plate 25 and the guide plate 32, a pusher pin 34 attached to the chain 33 so as to project to above the side plate 25 and the guide plate 32, and a pair of opposed vertical support plates 36 which are arranged respectively at opposite sides of the guide plate 32 and one of which has the guide plate 32 attached thereto by a bracket 35.

The second conveyor 12 comprises a striplike horizontal slide plate 13 extending along the transport path thereof, a pair of container pushing endless chains 14 arranged at the rear side of the slide plate 13 and adjacent thereto, and a plurality of pusher members 15 attached to the chains 14 at equal intervals so as to project to above the slide plate 13.

The slide plate 13 extends from the right side of the right discharge unit 31 to the left side of the left discharge unit 31. A pair of upper and lower rear guide rails 41 are arranged above the rear edge of the slide plate 13. Along the front edge of the slide plate 13, a pair of right and left tumbling preventing plates 42 are arranged as opposed to the respective guide plates 32 of the right and left discharge units 31, and a front guide rail 43 is disposed between the tumbling preventing plates 42.

The container pushing chains 14 are reeved around left drive sprockets 51 and right driven sprockets 52 to provide an upper path 53 of movement and lower path 54 of movement. The chains are supported at their upper side providing the path 53 by a chain guide 55 disposed between, and slightly to the rear of, the upper and lower rear guide rails 41.

The pusher member 15 is in the form of a horizontally elongated plate. When moving along the upper path 53 of the chains, the pusher member 15 is positioned between the rear guide plates 41 and above the slide plate 13. The pitch of the pusher members 15 is approximately equal to the pitch of the two transport paths of the first conveyor 11.

The third conveyor 16 is a belt conveyor, has a transport path 61 at the same level as the slide plate 13 and is continuously driven at the same speed as the speed of movement of the pusher member 15 or at a slightly lower speed.

Each front guide rail 17 extends obliquely across the transport path 61 of the third conveyor 16 thereabove and leftward from a left edge portion of the left tumbling preventing plate 42, and then extends leftward along the front edge of the transport path 61. Each rear guide rail 18 extends from a left edge portion of the guide plate 32 of the left discharge unit 31 obliquely across the slide plate 13 thereabove so as to be parallel to the front guide rail 17 and then extends leftward along the rear edge of the transport path 61.

Containers C are arranged in a row by the operation to be described below.

With reference to FIG. 4, a holder 24 is brought to a halt at the discharge station 5, whereupon the pusher pin 34 comes into contact with the bottom of the container C held by the holder 24, lifting the container C from the holder 24 for discharging. The container C discharged from the holder 24 is lifted along the guide plate 32, allowed to fall from the upper end thereof as turned upside down and received by the slide plate 13.

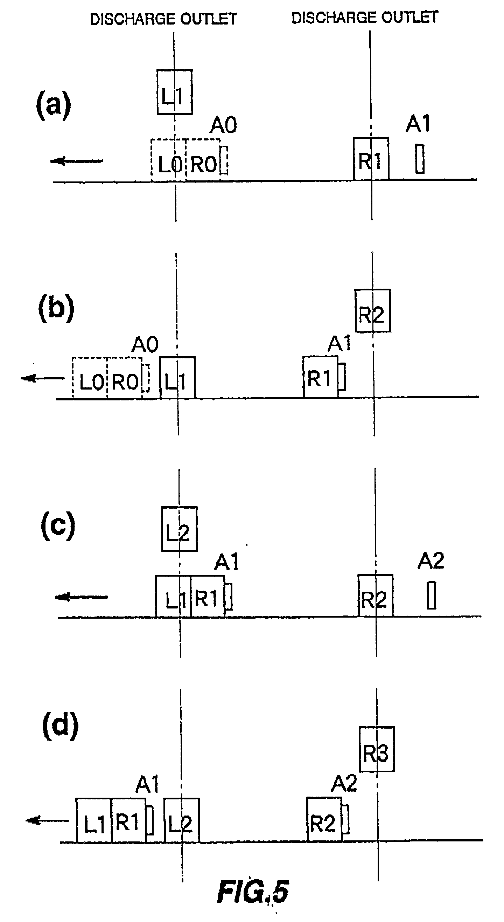

FIG. 5(a) shows a container R1 discharged from the right discharge unit 31, as it is supported at a right receiving position on the slide plate 13. In this state, one pusher member A1 is positioned at the right of the container R1. As indicated in phantom lines, two containers L0, R0 discharged by the preceding cycle and being pushed forward by another pusher member A0 are located in the vicinity of a left receiving position. When the pusher member A1 positioned at the right of the container R1 is moved leftward, the pusher member A1 comes into contact with the container R1, pushing the container R1 leftward from the right receiving position.

When the first conveyor 11 is driven by 1/2 cycle from the state shown in FIG. 5(a), another container L1 is discharged from the left discharge unit 31 this time, and the discharged container L1 is supported at the left receiving position on the slide plate 13 as shown in FIG. 5(b). The container R1 being pushed leftward by the pusher member A1 from the right receiving position is situated between the left receiving position and the right receiving position. The two containers L0, R0 indicated in the phantom lines have already moved past the left receiving position.

When the first conveyor 11 is further driven by 1/2 cycle, another container R2 is discharged again from the right discharge unit 31 as shown in FIG. 5(c). Thus, the first conveyor 11 is driven by one pitch, and FIG. 5(c) shows the same state as FIG. 5(a). Another pusher member A2 is positioned at the right side of the container R2 supported at the right receiving position. The container R1 being pushed between the left receiving position and the right receiving position comes into contact with the container L1 at the left receiving position, and the latter container L1 is pushed by the former container R1 in contact therewith.

When the first conveyor 11 is further driven by 1/2 cycle after having been driven 1 cycle, containers are in the state shown in FIG. 5(d), i.e., the same state as shown in FIG. 5(b). A container L2 discharged from the left discharge unit 31 is supported at the left receiving position on the slide plate 13. At this time, the two containers L1, R1 discharged by the preceding cycle have moved past the left receiving position, and are pushed leftward in contact with each other.

In this way, the two containers L1, R1 discharged by one cycle are pushed leftward on the slide plate 13 by one pusher member A1. Upon the containers L1, R1 reaching the location of the guide rails 17, 18, the containers L1, R1 are guided forward by the guide rails 17, 18 while being moved leftward on the slide plate 13, then transferred from the slide plate 13 to the transport path of the third conveyor 16 and further transported on the path as arranged in a row.

The second conveyor 12 and the third conveyor 16 are arranged in parallel in the foregoing embodiment, whereas the conveyors 12, 16 are arranged in series according to the modifications to be described next.

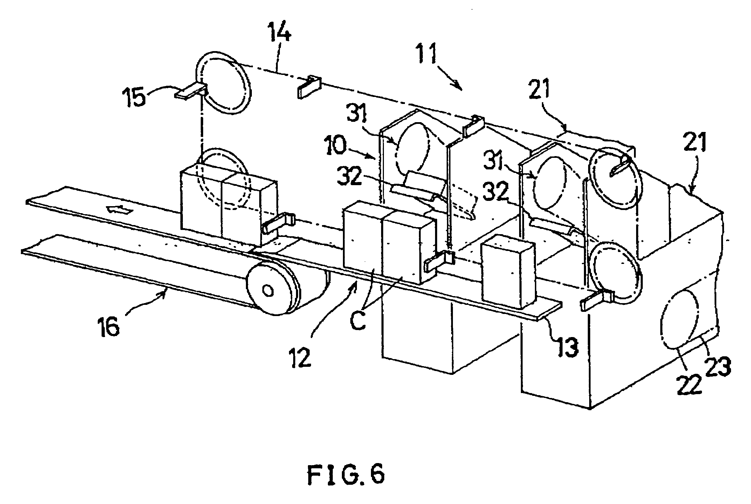

With reference to FIG. 6, the endless chains 14 of the second conveyor 12 have a lower path of movement extending along the rear edge of the slide plate 13. The third conveyor 16 is so disposed that the starting end of its transport path is connected to the left end of the slide plate 16. In this case, the containers C on the slide plate 13 are transferred to the third conveyor 16 by being pushed by pusher members 15.

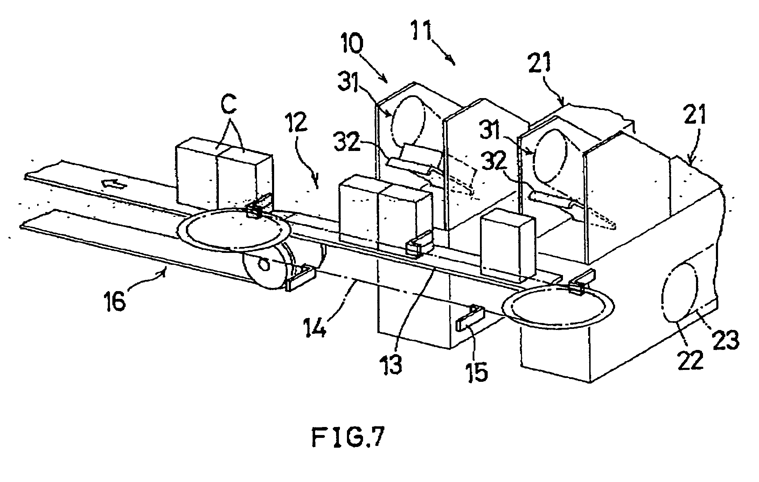

With reference to FIG. 7, the second conveyor 12 has endless chains 14 arranged horizontally and having a rear path of movement which extends along the front edge of the slide plate 13.

## Claims

1. An article transport apparatus comprising a first conveyor (11) having one or a plurality of transport paths (21) extending forward, a delivering device (10) for forwardly discharging articles (C) from a front end of each transport path of the first conveyor (11), a second conveyor (12) comprising a fixed slide plate (13) so disposed as to receive the articles (C) discharged by the delivery device (10) and forming a transport path extending in a direction orthogonal to the transport path or paths of the first conveyor (11), characterised in that adjacent each side of the fixed slide plate (13) there are guide means (41-43) situated at a higher level as said slide plate (13), whilst the delivery device (10) is so arranged as to guide the articles over the guide means mounted at the side of the slide plate directed towards the delivery device (10) and a pusher member (15) is so disposed as to be movable above the slide plate (13) at a constant speed.

2. Apparatus according claim 1, wherein the delivery device comprises a guide plate (32) sloping upwards in the direction of the slide plate (13).

3. Apparatus as claimed in claim 1 or 2, wherein at the side of the slide plate (13) opposite the delivery device (10) the guide means are formed by a substantially vertically extending guide plate (42).

4. Apparatus according any of the preceding claims, wherein the intermittently drivable first conveyor (11) has two forwardly extending transport paths for transporting articles (C) with a phase displacement of 1/2 cycle between the two transport paths and the delivering device (10) forwardly discharges the articles (C) from front ends of the two transport paths of the first conveyor (11) alternately one at a time.

5. Apparatus according any of the preceding claims, wherein the apparatus comprises a continuously drivable endless chain (14) having a straight path of movement extending along the slide plate (13), and a plurality of pusher members (15) so attached to the chain (14) as to project above the slide plate (13) and arranged at equal intervals.

6. Apparatus according any of the preceding claims, wherein the apparatus comprises a third conveyor (16) continuously drivable in the same direction as the direction of movement of the pusher member (15) and having a transport path connected to the slide plate (13) in parallel thereto, and a guide rail (18) extending obliquely across the slide plate (13) thereabove so as to guide articles (C) towards the third conveyor (16).

7. Apparatus according any of the preceding claims, wherein the apparatus comprises a third conveyor (16) continuously drivable in the same direction as the direction of movement of the pusher member (15) and having a transport path arranged in line with the transport path defined by the slide plate (13).

8. Apparatus according any of the preceding claims 6 or 7, wherein the speed of movement of the pusher member (15) is the same as the speed at which the third conveyor (16) is driven.

9. Apparatus according any of the preceding claims, wherein the two transport paths of the first conveyor (11) have been arranged so as to deliver articles (C) respectively to an upstream receiving position and a downstream receiving position on the slide plate (13) and the means for driving the first conveyor and the pusher members (15) have been made so that when an article (C) is delivered to the downstream receiving position, another article (C) delivered to the upstream receiving position and being pushed by one of the pusher members (15) is positioned between the two receiving positions.

## Patentansprüche

1. Eine Transportvorrichtung für Gegenstände mit einer ersten Fördervorrichtung (11), die einen oder eine Mehrzahl von sich vorwärts erstreckenden Transportwegen (21) aufweist, einer Austragsvorrichtung (10), um Gegenstände (C) vorwärts von einem vorderen Ende jedes Transportwegs der ersten Fördervorrichtung (11) zu entladen, einer zweiten Fördervorrichtung (12), die eine befestigte Gleitplatte (13) aufweist, welche so angeordnet ist, daß sie die Gegenstände (C), die von der Austragsvorrichtung (10) entladen werden, entgegennimmt, und einen Transportweg bildet, der sich in einer Richtung senkrecht zu dem Transportweg oder den Transportwegen der ersten Fördervorrichtung (11) erstreckt, **dadurch gekennzeichnet**, daß sich neben jeder Seite der befestigten Gleitplatte (13) oberhalb der Gleitplatte (13) Führungsmittel (41-43) befinden, wobei die Austragsvorrichtung (10) so angeordnet ist, daß sie die Gegenstände über die Führungsmittel, die an der Seite der Gleitplatte, die in Richtung der Zuführvorrichtung (10) weist, befestigt sind, leitet, und daß ein Stoßelement (15) so angeordnet ist, daß es oberhalb der Gleitplatte (13) mit einer konstanten Geschwindigkeit bewegbar ist.

2. Eine Vorrichtung nach Anspruch 1, worin die Austragsvorrichtung eine Gleitplatte (32), die sich aufwärts in Richtung der Gleitplatte (13) neigt, aufweist.

3. Eine Vorrichtung nach Anspruch 1 oder 2, worin das Führungsmittel an der Seite der Gleitplatte (13), die der Zuführvorrichtung (10) gegenüberliegt, durch eine sich im wesentlichen vertikal erstreckende Führungsplatte (42) gebildet wird.

4. Eine Vorrichtung gemäß einem der vorhergehenden Ansprüche, worin die intermittierend antreibbare erste Fördervorrichtung (11) zwei sich vorwärts erstreckende Transportwege aufweist, um Gegenstände (C) mit einer Phasenverschiebung von einem halben Zyklus zwischen den zwei Transportwegen zu transportieren, und die Austragsvorrichtung (10) die Gegenstände (C) vorwärts von den vorderen Enden der zwei Transportwege der ersten Fördervorrichtung (11) abwechselnd einen nach dem anderen entlädt.

5. Eine Vorrichtung gemäß einem der vorhergehenden Ansprüche, worin die Vorrichtung eine kontinuierlich antreibbare Endloskette (14), die einen sich gerade entlang der Gleitplatte (13) erstreckenden Bewegungsweg aufweist, und eine Mehrzahl von Stoßelementen (15), die so an der Kette (14) befestigt sind, daß sie über die Gleitplatte (13) vorstehen, und die in gleichmäßigen Abständen angeordnet sind, umfaßt.

6. Eine Vorrichtung nach einem der vorhergehenden Ansprüche, worin die Vorrichtung eine dritte Fördervorrichtung (16), die in gleicher Richtung wie die Bewegungsrichtung der Stoßelemente (15) antreibbar ist und einen Transportweg, der mit der Gleitplatte (13) parallel zu dieser verbunden ist, besitzt, und eine Führungsschiene (18), die sich schräg über die Gleitplatte (13) oberhalb von dieser erstreckt, um die Gegenstände (C) zu der dritten Fördervorrichtung (16) zu leiten, umfaßt.

7. Eine Vorrichtung nach einem der vorhergehenden Ansprüche, worin die Vorrichtung eine dritte Fördervorrichtung (16), die in der gleichen Richtung wie die Bewegungsrichtung der Stoßelemente (15) kontinuierlich antreibbar ist und einen Transportweg, der in einer Linie mit dem durch die Gleitplatte (13) definierten Transportweg angeordnet ist, besitzt, umfaßt.

8. Eine Vorrichtung nach einem der vorhergehenden Ansprüche 6 oder 7, worin die Bewegungsgeschwindigkeit der Stoßelemente (15) die gleiche Geschwindigkeit ist, mit der die dritte Fördervorrichtung (16) angetrieben wird.

9. Eine Vorrichtung nach einem der vorhergehenden Ansprüche, worin die zwei Transportwege der ersten Fördervorrichtung (11) derart angeordnet wurden, daß die Gegenstände (C) entsprechend zu einer stromaufwärts gelegenen Annahmeposition und einer stromabwärts gelegenen Annahmeposition auf der Gleitplatte (13) gefördert werden, und das Antriebsmittel der ersten Fördervorrichtung und der Stoßelemente (15) so beschaffen sind, daß wenn ein Gegenstand (C) der stromabwärts gelegenen Annahmeposition zugeführt wird, ein anderer Gegenstand (C), welcher der stromaufwärts gelegenen Annhmeposition zugeführt und von einem der Stoßelemente (15) gestoßen wurde, zwischen den zwei Annahmepositionen positioniert wird.

## Revendications

1. Dispositif de transport d'objets, comprenant un premier convoyeur (11) comportant au moins une trajectoire de transport (21) s'étendant vers l'avant, un dispositif de livraison (10) destiné à délivrer des objets (C) vers l'avant à partir d'une extrémité avant de chaque trajectoire de transport du premier convoyeur (11), un second convoyeur (12) comprenant une plaque de coulissement fixe (13) disposée pour recevoir les objets (C) délivrés par le dispositif de livraison (10) et formant une trajectoire de transport qui s'étend dans une direction orthogonale à chaque trajectoire de transport du premier convoyeur (11), caractérisé en ce qu'à proximité de chaque côté de la plaque de coulissement fixe (13), il est prévu des moyens de guidage (41-43) situés à un niveau plus élevé que ladite plaque de coulissement (13), tandis que le dispositif de livraison (10) est conçu pour guider les objets sur les moyens de guidage montés du côté de la plaque de coulissement qui est dirigé vers lui, et qu'un organe pousseur (15) est disposé de façon à pouvoir être déplacé au-dessus de la plaque de coulissement (13) à une vitesse constante.

2. Dispositif selon la revendication 1, dans lequel le dispositif de livraison comprend une plaque de guidage (32) inclinée vers le haut dans la direction de la plaque de coulissement (13).

3. Dispositif selon la revendication 1 ou 2, dans lequel du côté de la plaque de coulissement (13) opposé au dispositif de livraison (10), les moyens de guidage sont formés par une plaque de guidage (42) qui s'étend sensiblement verticalement.

4. Dispositif selon l'une quelconque des revendications précédentes, dans lequel le premier convoyeur (11) apte à être entraîné de manière intermittente comporte deux trajectoires de transport s'étendant vers l'avant pour transporter des objets (C) avec un décalage de' phase de 1/2 cycle entre les deux trajectoires de transport, le dispositif de livraison (10) délivrant les objets (C) un par un vers l'avant à partir des extrémités avant des deux trajectoires de transport du premier convoyeur (11) de manière alternée.

5. Dispositif selon l'une quelconque des revendications précédentes, dans lequel le dispositif comprend une chaîne sans fin (14) apte à être entraînée de manière continue et comportant une trajectoire de déplacement rectiligne qui s'étend le long de la plaque de coulissement (13), et plusieurs organes pousseurs (15) reliés à la chaîne (14) de manière à s'avancer au-dessus de la plaque de coulissement (13), et disposés à intervalles égaux.

6. Dispositif selon l'une quelconque des revendications précédentes, dans lequel le dispositif comprend un troisième convoyeur (16) apte à être entraîné de manière continue dans le même sens de déplacement que l'organe pousseur (15) et comportant une trajectoire de transport reliée à la plaque de coulissement (13) parallèlement à celle-ci, et un rail de guidage (18) qui s'étend obliquement en travers de la plaque de coulissement (13) et au-dessus de celle-ci afin de guider des objets (C) en direction du troisième convoyeur (16).

7. Dispositif selon l'une quelconque des revendications précédentes, dans lequel le dispositif comprend un troisième convoyeur (16) apte à être entraîné de manière continue dans le même sens de déplacement que l'organe pousseur (15) et comportant une trajectoire de transport disposée en alignement avec la trajectoire de transport définie par la plaque de coulissement (13).

8. Dispositif selon la revendication 6 ou 7 précédente, dans lequel la vitesse de déplacement de l'organe pousseur (15) est la même que la vitesse à laquelle le troisième convoyeur (16) est entraîné.

9. Dispositif selon l'une quelconque des revendications précédentes, dans lequel les deux trajectoires de transport du premier convoyeur (11) ont été conçues pour délivrer respectivement des objets (c) à une position de réception amont et à une position de réception aval sur la plaque de coulissement (13), tandis que les moyens destinés à entraîner le premier convoyeur et les organes pousseurs (15) ont été conçus pour que, lorsqu'un objet (C) est délivré à la position de réception aval, un autre objet (C) délivré à la position de réception amont en étant poussé par l'un des organes pousseurs (15) soit positionné entre les deux positions de réception.
